# EUROPÄISCHE PATENTANMELDUNG

(11) **EP 3 656 705 A1**
(43) Veröffentlichungstag der Anmeldung: **27.05.2020**
(21) Anmeldenummer: 20151767.9
(22) Anmeldetag: 27.03.2017
(51) Int. Cl.: B65G 21/20, B65G 47/68

(54) **FÖRDERVORRICHTUNG ZUM ZUSAMMENFÜHREN VON STÜCKGUTTEILEN VON MEHREREN EINSCHLEUSFÖRDERERN**

(62) Teilanmeldung aus: 17163072.6
(71) Anmelder: BEUMER Group GmbH & Co. KG, 59269 Beckum (DE)
(72) Erfinder: Heitplatz, Heino, 48317 Drensteinfurt (DE); Pölling, Ludger, 59326 Wadersloh-Diestedde (DE)
(74) Vertreter: Philipp, Matthias

(57) **Zusammenfassung**

Fördervorrichtung mit mindestens einem Einschleusförderer, einem Ausrichtförderer und einem Abzugsförderer zum Zusammenführen von Stückgutteilen von dem mindestens einen Einschleusförderer auf dem Abzugsförderer, wobei der Ausrichtförderer eine rechteckige Förderoberfläche hat und ein Annahmeende aufweist, an das ein Abgabeende oder nebeneinander angeordnete Abgabeenden des oder der Einschleusförderer anschließen, und ein parallel zu dem Annahmeende angeordnetes Abgabeende, an das ein Annahmeende des Abzugsförderers anschließt, wobei zwischen einem ersten, außenliegenden Seitenrand des oder eines ersten Einschleusförderers und einem gegenüberliegenden ersten Seitenrand des Abzugsförderers ein Leitelement angeordnet ist, das eine vertikal zu und unmittelbar über einer Förderoberfläche des Ausrichtförderers angeordnete Leitfläche aufweist, wobei eine Förderrichtung des Ausrichtförderers senkrecht zu dem Annahmeende und dem Abgabeende verläuft und eine von dem oder dem ersten Einschleusförderer zu dem Abzugsförderer gerichtete Längskomponente, die mit der Förderrichtung einen Winkel zwischen 3° und 45° bildet, und eine senkrecht gegen das Leitelement gerichtete Querkomponente aufweist, dadurch gekennzeichnet, dass der mindestens eine Einschleusförderer einen Übergangsförderer mit einer trapezförmigen Förderoberfläche aufweist, der unmittelbar an das Annahmeende des Ausrichtförderers anschließt.

## Beschreibung

Die Erfindung betrifft eine Fördervorrichtung zum Zusammenführen von Stückgutteilen von mindestens einem Einschleusförderer auf einen Abzugsförderer, wie sie beispielsweise aus der GB 2 114 521 A, der US 4,054,201 oder auch der DE 10 2007 034 519 A1 bekannt ist.

Bei den bekannten Fördervorrichtungen gelangen die Stückgutteile von zwei Einschleusförderern auf parallelen, beabstandeten Bahnen auf einen breiteren Ausrichtförderer, auf dem sie mittels eines schräg zur Förderrichtung des Ausrichtförderers angeordneten Leitelements oder Leitförderers auf eine schmalere Bahn zusammengedrängt werden und am Ende des Ausrichtförderers von einem Abzugsförderer übernommen werden.

Mit einer solchen Anordnung ist bei höheren Fördergeschwindigkeiten der Nachteil verbunden, dass die auf den Einschleusförderern ankommenden Stückgutteile mit zum Teil erheblichen Relativgeschwindigkeiten gegen das Leitelement bzw. den Leitförderer stoßen, was zu Beschädigungen führen kann.

Die Erfindung hat sich zur Aufgabe gestellt, eine bekannte Fördervorrichtung dahingehend zu verbessern, dass derartige Aufprallvorgänge nicht vorkommen können.

Zur Lösung dieser Aufgabe schlägt die Erfindung eine Fördervorrichtung nach Anspruch 1 vor, zum Zusammenführen von Stückgutteilen von mindestens einem Einschleusförderer auf einen Abzugsförderer . Die Vorrichtung umfasst einen Ausrichtförderer, der ein Annahmeende aufweist, an das ein Abgabeende oder nebeneinander angeordnete Abgabeenden des oder der Einschleusförderer anschließen, und ein parallel zu dem Annahmeende angeordnetes Abgabeende, an das ein Annahmeende des Abzugsförderers anschließt. Zwischen einem ersten, außenliegenden Seitenrand des oder eines ersten Einschleusförderers und einem gegenüberliegenden ersten Seitenrand des Abzugsförderers ist ein Leitelement angeordnet, das eine vertikal zu und unmittelbar über einer Förderoberfläche des Ausrichtförderers angeordnete Leitfläche aufweist.Eine Förderrichtung des Ausrichtförderers weist eine von dem oder dem ersten Einschleusförderer zu dem Abzugsförderer gerichtete Längskomponente und eine senkrecht gegen das Leitelement gerichtete Querkomponente auf.

Der Ausrichtförderer weist bevorzugt eine parallelogrammförmige Förderoberfläche auf, wobei die Förderrichtung des Ausrichtförderers unter einem Winkel α von weniger als 90° zu den Annahme- und Abgabeenden verläuft und das Abgabeende parallel zu und quer versetzt zu dem Annahmeende angeordnet ist. Bevorzugt schließt das Annahmeende unmittelbar an das Abgabeende des Einschleusförderers oder die Abgabeenden der Einschleusförderer an, wobei zweckmäßigerweise das Annahmeende parallel zu dem oder den Abgabeenden des oder der Einschleusförderer ist. Bevorzugt verläuft die Förderrichtung des Ausrichtförderers parallel zu Seitenrändern, die sich zwischen Endpunkten der Annahme- und Abgabeenden erstrecken.

Das Leitelement ist bevorzugt als Hochkantförderer ausgebildet, wobei dann die Leitfläche als Förderfläche ausgebildet ist und der Hochkantförderer ein Gleitförderer, etwa ein Gleitblech, ein Rollenförderer oder ein Gurt- oder Riemenförderer sein kann, der motorisch angetrieben ist. Insbesondere kann der Hochkantförderer mit einer Fördergeschwindigkeit antreibbar sein, die gleich einer von dem Annahmeende zu dem Abgabeende und quer zu diesen gerichteten Längsgeschwindigkeitskomponente des Ausrichtförderers ist.

Die Leitfläche bzw. Förderfläche des Hochkantförderers ist zweckmäßigerweise in einer Ebene angeordnet, die senkrecht zu der Förderoberfläche des Ausrichtförderers verläuft.

Der Winkel α kann bevorzugt zwischen 3° und 45° betragen, insbesondere zwischen 10° und 30° oder zwischen 20° und 25° und insbesondere 21,5°.

Obwohl in vielen Fällen zwei Einschleusförderer vorgesehen sind, kann nur ein einziger oder es können drei, vier oder mehr davon vorhanden sein. Bevorzugt ist vorgesehen, dass die Einschleusförderer unmittelbar benachbart zueinander angeordnet sind und ihre Förderrichtungen parallel sind.

Bevorzugt ist der außenliegende erste Seitenrand des oder des ersten Einschleusförderers, der mit dem Leitelement bzw. Hochkantförderer ausgerichtet ist, parallel zu dem gegenüberliegenden ersten Seitenrand des Abzugsförderers. Insbesondere kann eine Förderrichtung des oder des ersten Einschleusförderers parallel zur Förderrichtung des Abzugsförderers sein, und in einer bevorzugten Ausführung verlaufen der erste außenliegende Seitenrand des oder des ersten Einschleusförderers und der erste Seitenrand des Abzugsförderers in einer Ebene, in der sich die Leitfläche erstreckt. Wenn sich der Einschleusförderer, der Abzugsförderer und das Leitelement in einer Richtung erstrecken, oder anders ausgedrückt, wenn sich die jeweils außenliegenden Seitenränder des oder des ersten Einschleusförderers und des Abzugsförderers in der Ebene erstrecken, in der sich auch die Leitfläche erstreckt, ist ein geringer Schlupf der Stückgutteile zu erwarten, da alle Förderer den gleichen Geschwindigkeitsvektor in Förderrichtung haben können, d. h. in Richtung der Einschleus- und Abzugsförderer.

Ein zweiter, außenliegender Seitenrand des oder eines am weitesten von dem Leitelement bzw. Hochkantförderer entfernt angeordneten Einschleusförderers kann einen Abstand a von dem Hochkantförderer aufweisen, für den a = L · sin α gilt, wobei L der Abstand des Annahmeendes vor dem Abgabeende des Ausrichtförderers ist. Eine Länge des Leitelements oder Hochkantförderers kann ebenfalls gleich diesem Abstand L sein. Bei einer solchen Anordnung ist sichergestellt, dass auch ein Stückgutteil, welches entlang einer am weitesten von dem Hochkantförderer entfernten Bewegungsbahn auf dem oder einem Einschleusförderer dem Ausrichtförderer zugeführt wird, noch mit der Leitfläche bzw. mit dem Hochkantförderer in Berührung kommt und durch diesen ausgerichtet wird.

Die vorgenannte Bedingung kann z. B. unter Berücksichtigung einer kleinsten Breiten- oder Längenabmessung eines Stückgutteils dahingehend modifiziert werden, dass ein zweiter, außenliegender Seitenrand des oder des am weitesten von dem Hochkantförderer entfernt angeordneten Einschleusförderers einen Abstand a von dem Hochkantförderer aufweisen kann, für den a = (L · sin α + d) gilt, wobei d ein vorgegebenes Maß, etwa eine kleinste horizontale Abmessung wie Breite oder Länge eines transportierten Stückgutteils, ist.

Es kann vorgesehen sein, dass an dem Annahmeende des Ausrichtförderers zwei parallele, beabstandete, feststehende Umlenkprofile angeordnet sind, zwischen denen eine im Winkel α dazu stehende Antriebs- oder Umlenkrolle angeordnet ist.

Entsprechend können an dem Abgabeende des Ausrichtförderers zwei parallele, beabstandete, feststehende Umlenkprofile angeordnet sein, zwischen denen eine im Winkel α dazu stehende Antriebs- oder Umlenkrolle angeordnet ist.

Der Hochkantförderer kann eine Reihe von senkrecht zur Föderoberfläche des Ausrichtförderers angeordnete Rollen oder ein endlos umlaufendes Förderband aufweisen. Im letztgenannten Fall kann er an einem unteren Rand einen der Förderoberfläche des Ausrichtförderers unmittelbar benachbart angeordneten Bandträger aufweisen.

An einem dem Hochkantförderer gegenüberliegenden Seitenrand des Ausrichtförderers kann eine feststehende Seitenwange angeordnet sein. In einer alternativen Ausführungsform kann der Ausrichtförderer eine rechteckige Förderoberfläche aufweisen, wobei das Annahmeende an ein Abgabeende oder nebeneinander angeordnete Abgabeenden des oder der Einschleusförderer anschließt, und das Abgabeende an ein Annahmeende des Abzugsförderers anschließt. Zweckmäßigerweise ist der oder sind die Einschleusförderer als trapezförmige Übergangsförderer ausgebildet oder umfassen diese, wobei eine Förderrichtung des oder der Einschleusförderer parallel zu einer Förderrichtung des Abzugsförderers und zu der Längskomponente des Ausrichtförderers sein kann.

Die Erfindung wird nachfolgend anhand eines Ausführungsbeispiels erläutert, wobei auf eine Zeichnung Bezug genommen wird, in der
- Fig. 1: eine perspektivische Ansicht einer erfindungsgemäßen Fördervorrichtung zum Zusammenführen von Stückgutteilen von zwei Einschleusförderern auf einen Abzugsförderer zeigt,
- Fig. 2: eine Draufsicht auf die Fördervorrichtung nach Fig. 1 zeigt,
- Fig. 3: eine schematische Draufsicht auf den Ausrichtförderer zeigt,
- Fig. 4: eine perspektivische, schematische Ansicht des Ausrichtförderers zeigt,
- Fig. 5: eine Querschnittsansicht des Hochkantförderers zeigt,
- Fig. 6: die Funktionsweise der Fördervorrichtung anhand einer ersten Ausführungsform erläutert,
- Fig. 7: die Funktionsweise der Fördervorrichtung anhand einer zweiten Ausführungsform erläutert, und
- Fig. 8: eine alternative Ausführungsform der Erfindung erläutert.

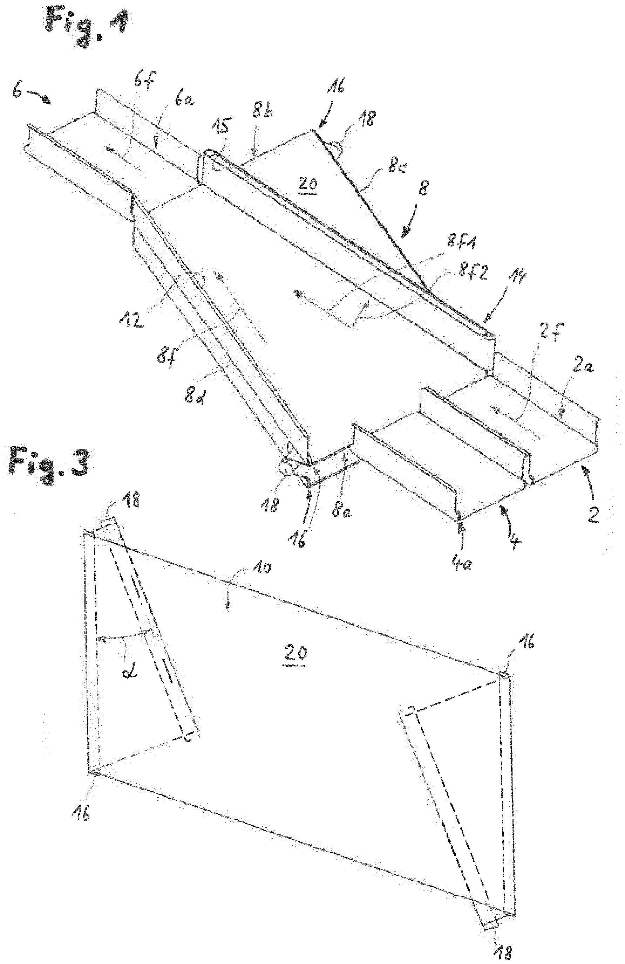

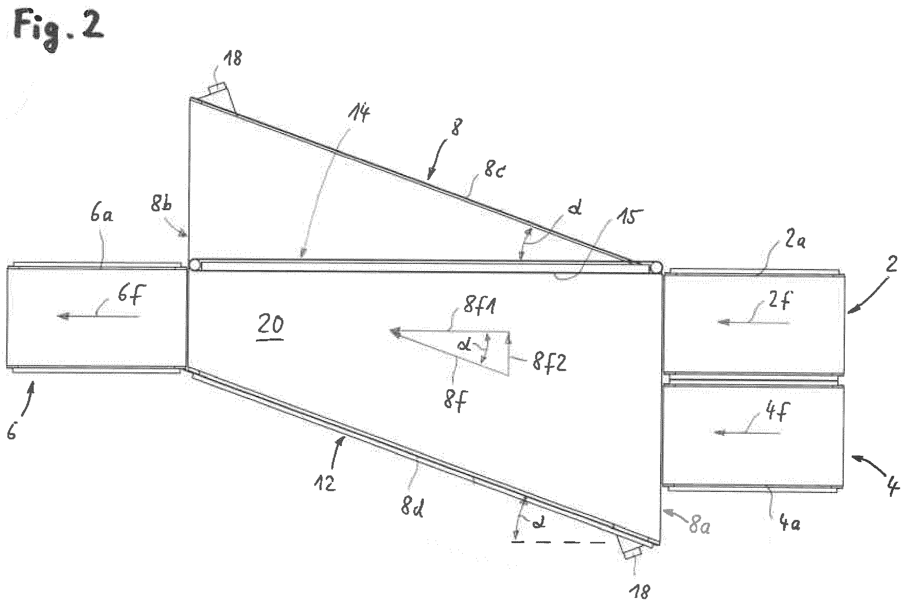

Das in Fig. 1 bis 4 erläuterte Ausführungsbeispiel zeigt eine Fördervorrichtung zum Zusammenführen von Stückgutteilen von zwei parallelen ersten und zweiten Einschleusförderern 2, 4 auf einen Abzugsförderer 6, mit einem dazwischen angeordneten, parallelogrammförmigen Ausrichtförderer 8. Die Einschleusförderer 2, 4 und der Abzugsförderer 6 sind bevorzugt als Gurtförderer ausgebildet, können jedoch alternativ Rollen- oder Gleitförderer sein.

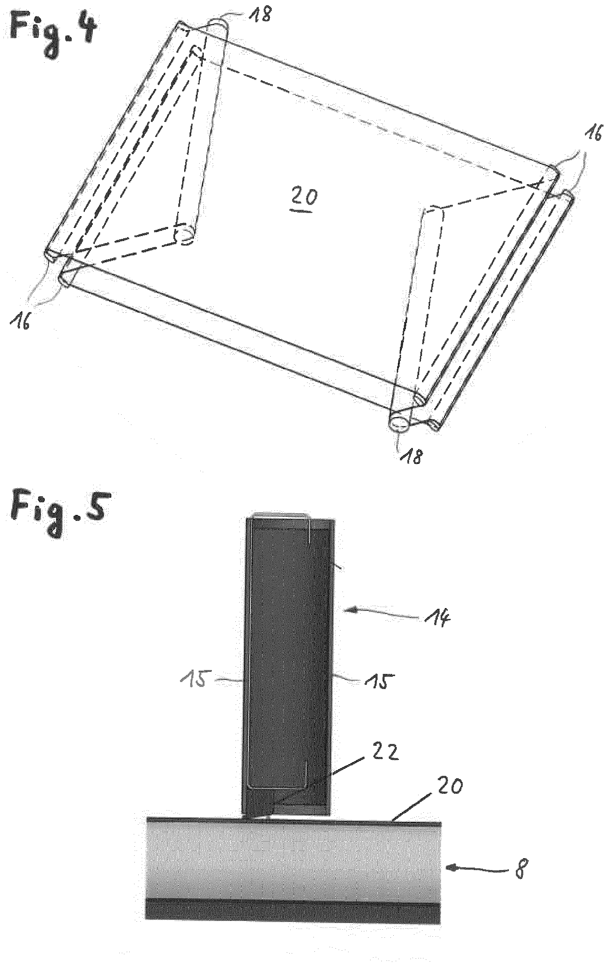

Der Ausrichtförderer 8 ist mehr im Einzelnen in Fig. 3 und 4 dargestellt und besitzt eine in der Draufsicht parallelogrammförmige Förderoberfläche 10, die sich zwischen einem geradlinigen Annahmeende 8a, einem dazu parallelen und quer versetzten, geradlinigen Abgabeende 8b und zwischen parallel zueinander verlaufenden Seitenrändern 8c, 8d erstreckt, wobei ein erster Seitenrand 8c benachbart zu dem ersten Einschleusförderer 2 verläuft und an einen ersten, außenliegenden Seitenrand 2a dieses Einschleusförderers 2 anschließt. An einem zweiten Seitenrand 8d des Ausrichtförderers 8 ist eine seitliche Begrenzung in Form einer feststehenden Seitenwange 12 angeordnet.

Ein Leitelement 14, das in der dargestellten Ausführungsform als Hochkantförderer mit einem endlos umlaufenden Fördergurt 15 ausgebildet ist, erstreckt sich zwischen dem genannten ersten, außen liegenden Seitenrand 2a des ersten Einschleusförderers 2 und einem ersten Seitenrand 6a des Abzugsförderers 6, wobei in dieser Ausführungsform der erste Seitenrand 2a des Einschleusförderers 2 in einer Linie mit dem Leitelement 14 und dem ersten Seitenrand 6a des Abzugsförderers verläuft. Eine Förderrichtung 2f des ersten Einschleusförderers 2 verläuft parallel zu einer Förderrichtung 6f des Abzugsförderers 6 und entspricht einer Längskomponente 8f1 der Förderrichtung 8f des Ausrichtförderers 8, die parallel zu dessen Seitenrändern 8c, 8d verläuft. Gleiches gilt für eine Förderrichtung 4f des zweiten Einschleusförderers 4. Das Leitelement 14 hat eine Leit- oder Förderoberfläche 14a, die sich in einer zu der Förderoberfläche 10 senkrechten Ebene erstreckt.

Im Betrieb der Fördervorrichtung sind die jeweiligen Fördergeschwindigkeiten bevorzugt so eingestellt, dass die Einschleusförderer 2, 4 und der Abzugsförderer 6 mit gleichen Fördergeschwindigkeiten v1 arbeiten, während eine Längsgeschwindigkeitskomponente v1 in Richtung der Längskomponente 8f1 des Ausrichtförderers 8 zweckmäßigerweise gleich dieser Fördergeschwindigkeit v1 ist. Dann haben alle Förderer einen gleichen Geschwindigkeitsvektor in Längsrichtung. Aufgrund der schrägen Anordnung des Ausrichtförderers und dessen Förderrichtung in Bezug auf das Leitelement bzw. den Hochkantförderer 14 besitzt die Förderrichtung 8f des Ausrichtförderers 8 eine Querkomponente 8f2, die senkrecht gegen das Leitelement 14 gerichtet ist. Die Quergeschwindigkeitskomponente v2 des Ausrichtförderers 8 ergibt sich somit über den Winkel α als v2 = v1 · tan α oder v2 = vf . sin α mit vf als Fördergeschwindigkeit des Ausrichtförderers in Förderrichtung 8f.

Der Aufbau des Ausrichtförderers 8 ergibt sich aus Fig. 3 und 4. Im Bereich der Annahme- und Abgabeenden 8a, 8b sind jeweils zwei feststehende Umlenkprofile 16 angeordnet, die sich bei horizontaler Anordnung des Ausrichtförderers mit Abstand in Vertikalrichtung gegenüberstehen. Dazwischen sind unter dem vorgegebenen Winkel α Antriebs- bzw. Umlenk- oder Spannrollen 18 angeordnet, über die ein endlos umlaufendes Förderband 20 geführt ist. Zwischen dem Fördergurt 20 und den Antriebs- oder Umlenkrollen 18 besteht Haftreibung, während zwischen den feststehenden Umlenkprofilen 16 und dem Förderband 20 Gleitreibung herrscht.

Fig. 5 erläutert eine Besonderheit im Bereich des Leitelements oder Hochkantförderers 14. Da der Hochkantförderer nicht unmittelbar auf dem Förderband 20 des Ausrichtförderers 8 aufliegen sollte, ist zwischen dem endlos umlaufenden Fördergurt 15 des Hochkantförderers 14 und dem Förderband 20 des Ausrichtförderers ein Bandträger 22 mit einem speziellen Kantenprofil vorgesehen, mit dem verhindert werden kann, dass besonders flache Stückgutteile oder Elemente davon, wie beispielsweise Bänder, Gurte, Teile von Tüten usw., aufgrund der Querkomponente des Ausrichtförderers 8 zwischen Hochkantförderer 14 und Ausrichtförderer 8 gelangen.

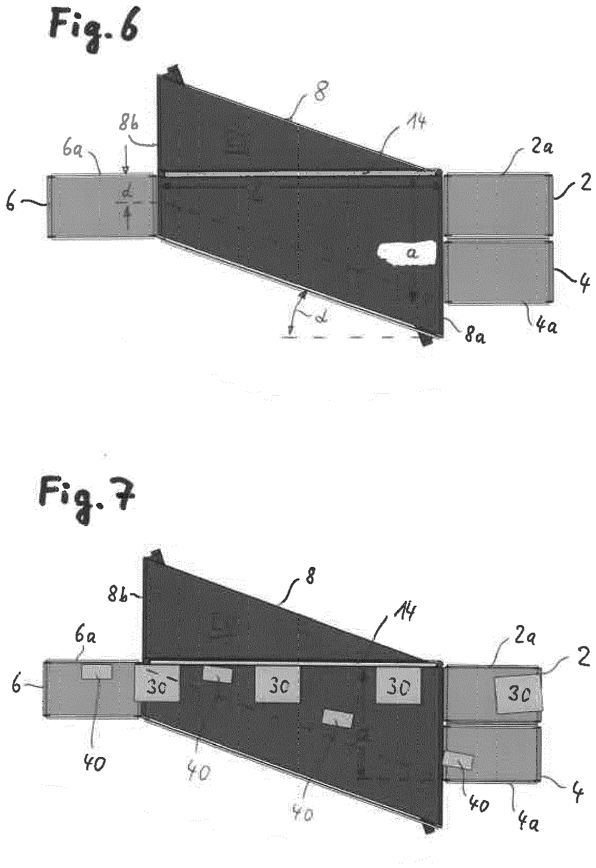

Figur 6 und 7 erläutern die Funktionsweise der Erfindung anhand von zwei Ausführungsformen. Figur 6 erläutert die Funktionsweise anhand einer ersten Ausführungsform, bei der zwei Einschleusförderer 2, 4 an das Annahmeende 8a des Ausrichtförderers 8 anschließend, und der Abzugsförderer 6 an das Abgabeende 8b des Ausrichtförderers 8 anschließt. Der Hochkantförderer 14 verläuft in einer Richtung und entlang einer geraden Linie mit dem ersten außenliegenden Seitenrand 2a des ersten Einschleusförderers 2 und mit dem gegenüberliegenden ersten Seitenrand 6a des Abzugsförderers 6. Ein Abstand a eines zweiten, außenliegenden Seitenrands 4a des am weitesten von dem Hochkantförderer bzw. Leitelement 14 entfernt angeordneten Einschleusförderers 4 von dem Hochkantförderer 14 ist so gewählt, dass gilt a = (L · sin α + d), wobei d ein bestimmtes Vorgabemaß ist. Dadurch soll sichergestellt werden, dass auch relativ kleine Stückgutteile vor dem Übergang auf den Abzugsförderer 6 noch in Kontakt mit dem Hochkantförderer 14 kommen und eine Ausrichtwirkung erfahren.

Figur 7 zeigt eine Ausführungsform, die der nach Figur 6 entspricht, mit dem Unterschied, dass das vorgenannte Maß d kleiner gewählt ist als in Figur 6, bei gleichem Winkel α und gleicher Länge L des Hochkantförderers, wobei ein Wert d von praktisch gleich 0 zugrunde gelegt worden ist. Anders ausgedrückt ist die Vorrichtung nach Figur 7 in der Lage, auch sehr kleine Stückgutteile 40, die in der Nähe des äußeren Seitenrands 4a des weiter bzw. am weitesten von dem Hochkantförderer 14 entfernt angeordneten Einschleusförderers 4 transportiert werden, sicher auszurichten. Es gilt bei d = 0 die Beziehung a = L · sin a.

Auf dem ersten Einschleusförderer 2 transportierte Stückgutteile 30 kommen in jedem Fall und unabhängig von ihrer Größe ersichtlich zwangsläufig in Kontakt mit dem Hochkantförderer 14.

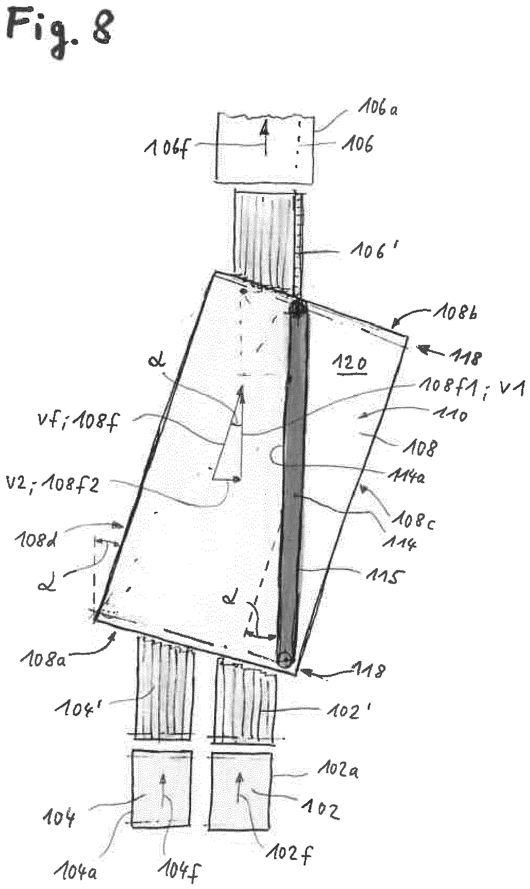

Figur 8 zeigt eine etwas andere Ausführungsform, bei der der Unterschied gegenüber der ersten Ausführungsform darin besteht, dass der Ausrichtförderer 108 nicht eine parallelogrammförmige, sondern eine rechteckförmige Förderoberfläche 110 aufweist und als herkömmlicher Band-, Gurt- oder Rollenförderer ausgebildet sein kann, dessen Förderrichtung 108f senkrecht zu Annahme- und Abgabeenden 108a, 108b und parallel zu Seitenrändern 108c, 108d des Ausrichtförderers 108 verläuft. Ein Leitelement 114, das auch in dieser Ausführungsform als Hochkantförderer mit einem endlos umlaufenden Fördergurt 115 ausgebildet ist, weist eine Leit- oder Förderoberfläche 114a auf, die sich in einer Ebene erstreckt, die senkrecht zu der Förderoberfläche 110 des Ausrichtförderers 108 angeordnet ist.

Zweckmäßigerweise ist der Ausrichtförderer 108 als Gurtförderer mit einem Fördergurt 120 ausgebildet, der um Antriebs- und Umlenkrollen 118 endlos umläuft, die jeweils an den zueinander parallelen Annahme- und Abgabeenden 108a, 108b angeordnet sind.

Die Ebene, in der sich die Förderoberfläche 114a des Leitelements 114 erstreckt, ist unter dem genannten Winkel α schräg zu der Förderrichtung 108f des Ausrichtförderers 108 angeordnet. Dadurch besitzt die Förderrichtung 108f des Ausrichtförderers 108 eine Längskomponente 108f1 parallel zu der genannten Ebene der Förderoberfläche 114a des Leitelements 114 und eine senkrecht dazu gerichtete Querkomponente 108f2. In gleicher Weise besitzt eine Fördergeschwindigkeit vf des Ausrichtförderers 108 eine Längskomponente v1 und eine Querkomponente v2.

Zwei parallele erste und zweite Einschleusförderer 102, 104 mit parallelen Förderrichtungen 102f, 104f dienen der Zuführung von Stückgutteilen auf den Ausrichtförderer 108, wobei die Förderrichtungen 102f, 104f der Einschleusförderer parallel zu der Längskomponente 108f1 des Ausrichtförderers 108 sind. Da die Einschleusförderer 102, 104 eine rechteckige Förderoberfläche aufweisen, mit einem Abgabeende, das senkrecht zur jeweiligen Förderrichtung 102f, 104f des betreffenden Einschleusförderers 102, 104 angeordnet ist, sind zur Überbrückung des ansonsten stehenden Zwischenraums Übergangsförderer 102', 104' vorgesehen, die jeweils eine trapezförmige Förderoberfläche aufweisen. Die Übergangsförderer 102', 104' können beispielsweise als Bandförderer mit zahlreichen nebeneinander angeordneten schmalen Förderbändern unterschiedlicher Länge ausgebildet sein, oder als Rollenförderer mit einer trapezförmigen Grundfläche und unterschiedlich langen, quer zur Förderrichtung angeordneten Rollen, oder wie dargestellt als Förderer mit einer trapezförmigen Förderoberfläche, deren schräg zur Förderrichtung angeordnetes Abgabeende durch eine schräge Umlenkung und eine schräg angeordnete Umlenkrolle (nicht dargestellt) gebildet wird, analog zu der in Fig. 3 erläuterten Bauweise des Ausrichtförderers 8.

An das Abgabeende 108b des Ausrichtförderers 108 schließt sich der Abzugsförderer 106 an, dessen Förderrichtung 106f parallel zur Längskomponente 108f1 des Ausrichtförderers 108 und zur Förderrichtung 102f, 104f der Einschleusförderer ist. Auch hier ist ein Übergangsförderer 106' vorgesehen, dessen Förderoberfläche trapezförmig ist und der wie die nach den Einschleusförderern angeordneten Übergangsförderer ausgebildet sein kann.

Ein erster außenliegender Seitenrand 102a des ersten Einschleusförderers ist parallel bzw. in einer Linie mit einem ersten Seitenrand 106a des Abzugsförderers 106 angeordnet, und zweckmäßigerweise in der Ebene, in der sich die Förderoberfläche 114a des Hochkantförderers 114 erstreckt.

Ein zweiter außenliegender Seitenrand 104a des zweiten Einschleusförderers 104 hat einen Abstand a von der Förderoberfläche 114a des Hochkantförderers 114, für den gilt a = L · sin α + d, wobei L eine Länge des Hochkantförderers 114 ist und d ein bestimmtes Vorgabemaß ist, das in einem bestimmten Fall 0 sein kann.

### Bezugszeichenliste

- 2, 102: (erster) Einschleusförderer
- 2a, 102a: erster außenliegender Seitenrand
- 2f, 102f: Förderrichtung
- 4, 104: Einschleusförderer
- 4a, 104a: zweiter außenliegender Seitenrand
- 4f, 104f: Förderrichtung
- 6, 106: Abzugsförderer
- 6a, 106a: erster Seitenrand
- 6f, 106f: Förderrichtung
- 8, 108: Ausrichtförderer
- 8a, 108a: Annahmeende
- 8b, 108b: Abgabeende
- 8c, 108c: erster Seitenrand
- 8d, 108d: zweiter Seitenrand
- 8f, 108f: Förderrichtung
- 8f1, 108f1: Längskomponente der Förderrichtung
- 8f2, 108f2: Querkomponente der Förderrichtung
- 10, 110: Förderoberfläche (von 8, 108)
- 12: Seitenwange
- 14, 114: Leitelement (Hochkantförderer)
- 14a, 114a: Leit- oder Förderoberfläche
- 15, 115: Fördergurt
- 16: Umlenkprofil
- 18, 118: Antriebs-, Umlenk- und/oder Spannrolle
- 20, 120: Förderband
- 22: Bandträger
- 30, 40: Stückgutteil
- 102', 104', 106: Übergangsförderer
- a: Abstand (4a, 104a von 14, 114)
- d: kleinste Abmessung eines Stückgutteils
- L: Länge (von 14, 114)
- α: Winkel (zwischen 8f, 108f und 6f, 106f)
- v1: Längsgeschwindigkeitskomponente (von vf)
- v2: Quergeschwindigkeitskomponente (von vf)
- vf: Fördergeschwindigkeit von 8 (108) in Richtung 8f (108f)

## Patentansprüche

1. Fördervorrichtung mit mindestens einem Einschleusförderer (102; 104), einem Ausrichtförderer (108) und einem Abzugsförderer (106) zum Zusammenführen von Stückgutteilen (30, 40) von dem mindestens einen Einschleusförderer (102; 104) auf dem Abzugsförderer (106), wobei der Ausrichtförderer (8, 108) eine rechteckige Förderoberfläche (110) hat und ein Annahmeende (108a) aufweist, an das ein Abgabeende oder nebeneinander angeordnete Abgabeenden des oder der Einschleusförderer anschließen, und ein parallel zu dem Annahmeende (108a) angeordnetes Abgabeende, an das ein Annahmeende des Abzugsförderers (6; 106) anschließt, wobei zwischen einem ersten, außenliegenden Seitenrand (102a) des oder eines ersten Einschleusförderers (102) und einem gegenüberliegenden ersten Seitenrand (106a) des Abzugsförderers (106) ein Leitelement (114) angeordnet ist, das eine vertikal zu und unmittelbar über einer Förderoberfläche (110) des Ausrichtförderers (108) angeordnete Leitfläche (114a) aufweist, wobei eine Förderrichtung (108f) des Ausrichtförderers (108) senkrecht zu dem Annahmeende (108a) und dem Abgabeende verläuft und eine von dem oder dem ersten Einschleusförderer (102) zu dem Abzugsförderer (106) gerichtete Längskomponente (108f1), die mit der Förderrichtung (108f) einen Winkel (a) zwischen 3° und 45° bildet, und eine senkrecht gegen das Leitelement (114) gerichtete Querkomponente (108f2) aufweist, **dadurch gekennzeichnet, dass** der mindestens eine Einschleusförderer (102, 104) einen Übergangsförderer (102', 104') mit einer trapezförmigen Förderoberfläche aufweist, der unmittelbar an das Annahmeende (108a) des Ausrichtförderers (108) anschließt.

2. Fördervorrichtung nach Anspruch 1, **dadurch gekennzeichnet, dass** der Abzugsförderer (106) einen Übergangsförderer (106') mit einer trapezförmigen Förderoberfläche aufweist, der an das Abgabeende des Ausrichtförderers (108) anschließt.

3. Fördervorrichtung nach Anspruch 1 oder 2, **dadurch gekennzeichnet, dass** eine Förderrichtung (102f, 104f) des mindestens einen Einschleusförderers (102; 104) parallel zu der Längskomponente (108f1) der Förderrichtung (108f) des Ausrichtförderers (108) ist.

4. Förderrvorrichtung nach Anspruch 1, 2 oder 3, **dadurch gekennzeichnet**, das eine Förderrichtung (106f) des Abzugsförderers (106) parallel zu der Längskomponente (108f1) der Förderrichtung (108f) des Ausrichtförderers (108) ist.

5. Fördervorrichtung nach einem der vorrangehenden Ansprüche , **dadurch gekennzeichnet, dass** die Leitfläche (114a) des Leitelements (114) in einer senkrecht zu der Förderoberfläche (110) des Ausrichtförderers (108) verlaufenden Ebene angeordnet ist.

6. Fördervorrichtung nach einem der vorangehenden Ansprüche, **dadurch gekennzeichnet, dass** das Leitelement als Hochkantförderer (114) ausgebildet ist, wobei die Leitfläche (114a) als Förderfläche ausgebildet ist und der Hochkantförderer (114) ein Gleitförderer, Rollenförderer oder Gurt- oder Riemenförderer sein kann, der motorisch angetrieben sein kann.

7. Fördervorrichtung nach Anspruch 6, **dadurch gekennzeichnet, dass** der Hochkantförderer (114) mit einer Fördergeschwindigkeit antreibbar ist, die gleich der in Richtung der Längskomponente (108f1) der Förderrichtung (108f) des Ausrichtförderers (108) gerichteten Längsgeschwindigkeitskomponente (v1) des Ausrichtförderers (108) ist.

8. Fördervorrichtung nach einem der vorangehenden Ansprüche, **dadurch gekennzeichnet, dass** der Winkel (α) zwischen 10° und 30° oder zwischen 20° und 25° und insbesondere 21,5° beträgt.

9. Fördervorrichtung nach einem der vorangehenden Ansprüche, **dadurch gekennzeichnet, dass** der erste Seitenrand (102a) des ersten Einschleusförderers (102) parallel zu dem gegenüberliegenden ersten Seitenrand (106a) des Abzugsförderers (106) ist.

10. Fördervorrichtung nach einem der vorangehenden Ansprüche, **dadurch gekennzeichnet, dass** der erste außenliegende Seitenrand (102a) des oder des ersten Einschleusförderers (102) und der erste Seitenrand (106a) des Abzugsförderers (106) in einer Ebene verlaufen, in der sich die Leitfläche (114a) erstreckt.

11. Fördervorrichtung nach einem der vorangehenden Ansprüche, **dadurch gekennzeichnet, dass** ein zweiter, außenliegender Seitenrand (104a) des oder eines am weitesten von dem Leitelement (114) entfernt angeordneten Einschleusförderers (104) einen Abstand (a) von dem Leitelement (114) aufweist, für den a = L · sin α gilt, wobei L der Abstand des Annahmeendes (108a) von dem Abgabeende (108b) des Ausrichtförderers ist.

12. Fördervorrichtung nach Anspruch 11, **dadurch gekennzeichnet, dass** a = L · sin α + d gilt, wobei d ein vorgegebenes Maß, etwa eine kleinste horizontale Abmessung eines transportierten Stückgutteils (30, 40) ist.

13. Fördervorrichtung nach einem der Ansprüche 6 bis 12, **dadurch gekennzeichnet, dass** der Hochkantförderer (114) einen endlos umlaufenden Fördergurt (115) und an einem unteren Rand einen der Förderoberfläche (110) des Ausrichtförderers (108) unmittelbar benachbart angeordneten Bandträger aufweist.
